# FASCICULE DE BREVET EUROPEEN

(11) **EP 4 020 116 B1**
(45) Date de publication et mention de la délivrance du brevet: **07.05.2025**
(21) Numéro de dépôt: 21215792.9
(22) Date de dépôt: 19.12.2021
(51) Int. Cl.: G05G 1/44, G05G 1/38, F02D 11/02, B60K 26/02

(54) **SYSTÈME D'ACCÉLERATEUR BIS**
DOPPEL-BESCHLEUNIGERSYSTEM
BIS ACCELERATOR SYSTEM

(30) Priorité: 18.12.2020 FR 2013674
(43) Date de publication de la demande: 29.06.2022
(73) Titulaire: Sojadis Equipement, 49510 Beaupreau-En-Mauges (FR)
(72) Inventeur: HUMEAU, Jean-Marie, 49510 Jallais (FR)
(74) Mandataire: Fidal Innovation

(56) Documents cités:
- CN-U- 202 225 742
- JP-A- 2014 157 415
- US-A1- 2012 297 920
- US-A1- 2020 257 327

## Description

### DOMAINE DE L'INVENTION

La présente invention se rapporte à un système de véhicule automobile, plus particulièrement à un système d'accélérateur bis de véhicule automobile.

### ARRIERE-PLAN TECHNOLOGIQUE

Plus précisément, l'invention se rapporte à un système d'accélérateur bis de véhicule automobile pour commander l'accélération du véhicule au pied depuis un autre emplacement que l'accélérateur d'origine. L'invention se rapporte également au kit correspondant au système d'accélérateur bis complet qui comprend le système d'accélérateur bis.

La gestion de l'accélération sur un véhicule automobile est une des fonctions les plus critiques sur un véhicule automobile. Une panne, ou un simple dysfonctionnement du système d'accélération peut entrainer un très grave accident. Au niveau de la gestion de l'accélération, on recherche donc les solutions technologiques les plus fiables.

A la recherche d'une fiabilité toujours plus élevée, certains éléments mécaniques, susceptibles d'usure et de défaillance, sont remplacés par des éléments électroniques. En effet, ces derniers sont moins susceptibles d'usure et de rupture brutale. Au niveau des solutions électroniques, les dispositifs numériques sont préférés aux dispositifs analogiques. En effet, les dispositifs numériques sont moins sensibles à l'usure, peuvent être mieux contrôlés, et les anomalies détectées peuvent être corrigées en temps réel par des calculateurs embarqués. US 2012/297,920 décrit une pédale d'accélérateur munie d'un capteur.

Dans le domaine de la pédale pour véhicule automobile, il est connu, par exemple de CN202225742U des systèmes d'accélérateur pour pied gauche, particulièrement utiles pour les personnes handicapées au niveau du pied droit.

Il est également connu des systèmes de pédales bis complets (accélérateur / frein / embrayage) pour équiper les véhicules d'auto-école.

Les équipements automobiles connaissent une évolution permanente. Ainsi, de nouvelles contraintes apparaissent pour un système d'accélérateur bis. Une première contrainte vient de la limitation en termes d'espace disponible pour monter un kit d'accélérateur bis complet. De plus en plus d'équipements prennent une place importante sous le tableau de bord du conducteur, obligeant le système d'accélérateur bis complet à être très compact et adaptable.

On cherche à ce que ces systèmes d'accélérateur bis soient adaptables au maximum de modèles de véhicules, quelles que soient leurs spécificités, pratiques et simples à poser, déposer et reposer.

La technologie utilisée pour gérer l'accélération sur un véhicule a évolué, passant en quelques dizaines d'années d'une solution purement mécanique à base de tringles et/ou de câbles, à des solutions de plus en plus basées sur l'utilisation de l'électronique.

Les solutions électroniques analogiques sont à leur tour remplacées par des solutions électroniques numériques.

Les systèmes d'accélérateur pour pied gauche ne permettent pas de gérer les technologies les plus récentes, notamment le bus CAN (Controller Area Network) qui est un standard de bus série de communication numérique de plus en plus utiliser sur les nouveaux modèles de véhicules automobiles. PWM est un autre standard de bus couramment utilisé pour synthétiser des signaux pseudo analogiques. Enfin Le protocole SAE J2716 SENT (Single Edge Nibble Transmission) est un schéma point à point pour transmettre les valeurs de signal d'un capteur à un contrôleur. Il est destiné à permettre la transmission de données à haute résolution avec un faible coût.

Le document FR 3003047 B1 est un exemple dans lequel la répétition des commandes de pédale pour une auto-école est assuré à l'aide d'un système hydraulique.

Toutefois, une telle répétition de pédale d'accélérateur n'est pas compatible avec une pédale d'origine numérique. De plus un tel dispositif prend une place importante qui n'est pas disponible sur les modèles de véhicule récents.

Les solutions de pédales d'accélérateur électronique bis actuelles ne sont donc pas évolutives et doivent être entièrement modifiées à chaque évolution de véhicule. De plus, un signal analogique, susceptible de se dégrader avec l'usure du capteur analogique est utilisé dans les systèmes de pédales d'accélérateur électronique bis actuelles.

L'invention vise ainsi à fournir un système d'accélérateur numérique bis qui soit générique, fiable, miniaturisé et adapté ou facilement adaptable à la plupart des modèles de véhicule récents et à venir, quelle que soit l'interface de communication et la configuration du véhicule. Ledit système devra permettre de gérer de nouveaux protocoles numériques avec un minimum d'adaptation.

Pour cela, une nouvelle pédale d'accélérateur bis numérique a été mis au point.

### RESUME DE L'INVENTION

Ainsi, l'invention se rapporte à un système d'accélérateur bis pour véhicule automobile comprenant :
- un système de fixation pour fixer le système d'accélérateur bis à un véhicule,
- un bâti solidaire du système de fixation, et définissant un axe de rotation,
- un bâti solidaire du système de fixation, et définissant un axe de rotation,
- un actionneur comprenant un patin de pédale, une tige de liaison, et un élément de fixation fixé sur un arbre de rotation monté rotatif par rapport au châssis autour de l'axe de rotation, et dont la position par rapport au bâti de la pédale est détectée par un capteur de position, ledit capteur de position étant apte à générer un signal représentatif de la position dudit actionneur,
- un calculateur recevant le signal représentatif de la position dudit actionneur est configurable via une interface d'entrée afin de générer un signal représentatif de la position dudit actionneur selon plusieurs standards, ledit calculateur est connectable via une interface de sortie à un réseau de communication d'information d'un véhicule automobile, et en ce que
- l'actionneur peut se fixer selon au moins deux positions axiales différentes par rapport à l'axe de rotation.

Le système d'accélérateur bis permet d'actionner l'accélérateur avec un pied comme la pédale d'origine mais depuis un autre emplacement que l'emplacement d'origine de l'accélérateur situé au niveau des pieds d'un passager avant ou d'un conducteur d'un véhicule.

Certains éléments sont génériques, quel que soit le véhicule :
- le système de fixation,
- le capteur de position,
- le système générant un effet de butée,
- le calculateur configurable.

Un élément complémentaire spécifique est nécessaire : il s'agit de l'actionneur comprenant un patin de pédale et une tige de liaison. En fonction du type de véhicule, le patin et la tige de liaison seront réalisés sur mesure.

Une telle pédale d'accélérateur bis est utile :
- dans le cas d'un véhicule conduit par un conducteur handicapé de sa jambe droite afin de donner un accès plus naturel à l'accélérateur au conducteur handicapé,
- ou dans le cas d'un véhicule d'auto-école afin de donner accès au moniteur à l'accélérateur lorsqu'il est assis à côté du conducteur en apprentissage.

Le système de fixation correspond au système qui permet de fixer la pédale d'accélérateur bis au véhicule. Le système peut utiliser un ou plusieurs des principes de fixation classique : collage, vissage, etc.

Le capteur de position peut générer un signal analogique ou un signal numérique. De préférence, un signal numérique est préféré car il est moins susceptible de subir des interférences.

Le calculateur est configurable en le branchant (le cas échéant de manière non filaire) sur un ordinateur. La configuration est enregistrée à l'aide d'une mémoire intégrée au calculateur. Le calculateur présente des capacités de stockage et de rapidité de traitement de l'information suffisantes afin de pouvoir gérer l'ensemble des protocoles de communication connus et à venir.

Grâce à la présence du calculateur placé sur le système d'accélération bis du véhicule, on peut générer un signal qui reproduit à l'identique le signal d'origine de la pédale d'accélération.

Grâce à ces dispositions, il est possible d'adapter l'interface de communication avec n'importe lequel des protocoles de communication de données embarqués de véhicule automobile présents, et dans une certaine mesure avec d'éventuels protocoles à venir.

Ainsi la même pédale d'accélérateur bis peut être utilisée quel que soit le protocole utilisé pour transmettre l'information en aval sur le véhicule automobile, sans que l'interfaçage avec le véhicule nécessite de modifications au niveau électronique au-delà de la configuration du calculateur configurable.

De plus, il est possible d'adapter la position de l'actionneur en fonction de l'espace disponible à l'avant de l'habitacle du véhicule, permettant ainsi un positionnement ergonomique idéal de la pédale, non contraint par le point de fixation accessible sous le tableau de bord.

Ainsi la même pédale d'accélérateur bis peut être utilisée quelle que soit la configuration de l'habitacle, sans que l'interfaçage avec le véhicule ne nécessite de modifications au niveau structurel au-delà de la configuration du positionnement configurable de la tige de liaison.

Selon différents aspects, il est possible de prévoir l'une et/ou l'autre des dispositions ci-dessous.

Selon une réalisation, l'élément de fixation peut se fixer de chaque côté latéral de l'actionneur du bâti.

Ainsi, en fonction de l'espace disponible dans l'habitacle au niveau du plancher et de la partie inférieure du tableau de bord, on pourra régler la position de la pédale d'accélérateur simplement en choisissant une des configurations offertes par l'élément de fixation pour fixer l'actionneur sur le capteur.

Selon une réalisation, le calculateur est apte à s'interfacer avec l'architecture électronique du véhicule automobile à l'aide d'un signal multiplexé.

Ainsi, la pédale pourra s'interfacer avec les nouvelles générations de véhicules équipées de moyens de communication basées sur des bus permettant l'échange de signaux multiplexés.

Selon une réalisation, le calculateur est configurable pour générer un signal multiplexé selon la norme ISO 11898 (CAN), ou modulés en Largeur d'Impulsion (MLI), ou transmis par paquet sur front unique selon la norme SAE J2716 (SENT), ou analogiques.

La norme ISO 11898 (CAN) est une norme qui caractérise le bus de données CAN (Controller Area Network). Le bus CAN est un bus système série très répandu dans beaucoup d'industries, notamment l'automobile.

Le bus CAN met en application une approche connue sous le nom de multiplexage, et qui consiste à raccorder à un même câble (un bus) un grand nombre de calculateurs qui communiqueront donc à tour de rôle. Cette technique élimine le besoin de câbler des lignes dédiées pour chaque information à faire transiter (connexion point-à-point).

Dès qu'un système (voiture, avion, réseau téléphonique, etc.) atteint un certain niveau de complexité, l'approche point-à-point devient compliquée du fait de l'immense quantité de câblage à installer et de son coût (en masse, matériaux, main d'œuvre, maintenance).

L'introduction des bus multiplexés (principalement le CAN) dans l'automobile avait pour objectif de réduire la quantité de câbles dans les véhicules (il y a pu avoir jusqu'à 2 km de câbles par voiture), mais elle a surtout permis l'explosion du nombre de calculateurs et de capteurs distribués dans tout le véhicule, et des prestations correspondantes (baisse de consommation, dépollution, sécurité active/passive, confort, détection des pannes, etc.), tout en diminuant les longueurs câblées.

La transmission du signal par Bus CAN permet donc une communication optimisée à bord d'un véhicule. Ainsi, on améliore la fiabilité car, dans ce mode de réalisation, les interfaces selon le protocole CAN sont très résistantes aux interférences.

Un signal MLI (Modulation de Largeur d'Impulsions) ou PWM en anglais (« Pulse Width Modulation ») est un signal dont le rapport cyclique varie. Ce type du signal est souvent utilisé dans les applications à valeur moyenne variable.

Le protocole de communication SAE J2716 SENT (« Single Edge Nibble Transmission ») est destiné aux applications à sécurité critique, dans le domaine automobile et le domaine du transport en général.

Le protocole de communication SAE J2716 SENT facilite le remplacement de la signalisation analogique entre capteurs et microcontrôleurs.

Ainsi, la pédale d'accélérateur bis est compatible avec les principales normes modernes de communication numériques déployées sur les véhicules automobiles produits en série.

Selon une réalisation, le calculateur est configurable pour générer un signal qui reproduit les informations du mouvement de la pédale d'origine selon toutes ses dimensions, notamment vitesse d'accélération de la pédale, course complète d'accélération, position et/ou position limite atteinte.

Ainsi, on peut reproduire l'ensemble des informations générées par la pédale d'accélération d'origine.

Selon une réalisation, le capteur est un capteur à effet Hall générant un signal électronique numérisé.

Ainsi, on améliore la fiabilité car, dans ce mode de réalisation, le capteur n'a pas de pièce en contact et en mouvement, ce qui permet d'éviter une usure mécanique qui peut altérer le signal.

Selon une réalisation, le système d'accélérateur bis pour véhicule automobile comprend une deuxième partie de fixation amovible de la tige de liaison à l'arbre de rotation.

Ainsi, si on doit cesser d'utiliser le système d'accélérateur bis sur certains trajets et utiliser à la place uniquement la pédale d'accélérateur d'origine, il est possible de retirer le patin de pédale du système d'accélérateur bis afin de neutraliser le système d'accélérateur bis.

Selon une réalisation, le bâti comprend une embase à partir de laquelle s'étendent deux ailes parallèles définissant un palier pour l'arbre de rotation, l'embase définissant un logement pour un boîtier abritant le capteur de position, l'arbre de rotation comprenant un premier logement adapté pour recevoir au moins partiellement le boîtier, et un deuxième logement portant un aimant en regard du premier logement.

Véhicule d'auto-école équipé d'un pédalier conducteur et du système d'accélérateur bis pour véhicule automobile tel que définit ci-dessus.

On peut utiliser le système d'accélérateur bis tel que défini ci-dessus comme pédale d'accélérateur pour pied gauche installé au niveau de la place conducteur d'un véhicule adapté pour un conducteur handicapé de la jambe droite.

On peut également utiliser le système d'accélérateur bis tel que défini ci-dessus comme pédale d'accélérateur pour un instructeur installé au niveau de la place avant passager d'un véhicule d'auto-école.

### BREVE DESCRIPTION DES DESSINS

Des modes de réalisation de l'invention seront décrits ci-dessous par référence aux dessins, décrits brièvement ci-dessous :
[Fig. 1] représente une vue en trois dimensions éclatée d'une pédale bis démontée selon un mode de réalisation depuis un point de vue.
[Fig. 2] représente une vue en trois dimensions éclatée d'une pédale bis démontée selon un mode de réalisation depuis un autre point de vue que celui de la figure 1.
[Fig. 3] représente le détail de la figure 1 identifié par la lettre E.

Sur les dessins, des références identiques désignent des objets identiques ou similaires.

### DESCRIPTION DETAILLEE

Le système d'accélérateur bis 1 comprend un système de fixation 2, un calculateur configurable 3, un système de butée 4, un capteur 5 et un actionneur 6.

Le système de fixation peut comprendre une contre-plaque 10 enduite d'adhésif à fort pouvoir fixant en contact avec l'air recouvert d'un film protecteur, combinée avec trois trous permettant le passage de trois vis. En retirant ledit film protecteur, en positionnant cette plaque à un emplacement du plancher d'un véhicule préalablement dépourvu de toute garniture (mousse isolante, tapis de sol, moquette, etc.), le système d'accélérateur bis 1 est fixé au véhicule. Pour renforcer cette fixation, il est possible de visser des vis dans les trois trous. La longueur des vis devra être supérieure à l'épaisseur de la plaque et le diamètre de la tête des vis devra être supérieur au diamètre des trous de la plaque. La contre-plaque 10 comprend sur la face opposée à la face enduite de d'adhésif des ergots positionnés à travers les trous du bâti de la pédale 55. Un moyen de fixation réversible vient sceller la contre-plaque avec le châssis de la pédale 55. Le système de fixation 2 est alors fixé sur le bâti de la pédale 55.

Afin de mesurer le déplacement de la pédale, une variation d'un champ magnétique est mesurée. Pour cela, un élément fixe, solidaire du bâti de la pédale 55, et un élément mobile, solidaire de l'actionneur 6 interagissent par voie magnétique. Le bâti de la pédale 55 définit un axe de rotation, notamment un axe de rotation transversal pour la rotation de l'actionneur par rapport au châssis de la pédale. Il peut s'agir d'une liaison pivot.

Le premier élément fixe est un capteur 5 positionné sur une saillie 30 d'une carte électronique 20 positionnée dans un couvercle inférieur 40 en plastique laissant passer les ondes magnétiques. Ledit couvercle inférieur 40 est assemblé à un couvercle supérieur 41 afin de recouvrir entièrement la carte électronique 20. Ainsi ladite carte électronique 20 est protégée des coups et d'éventuels contacts avec des pièces électriquement conductrices susceptibles de créer des courts-circuits. La carte électronique 20 comprend un calculateur configurable 3. Ladite carte électronique 20 est protégée par le couvercle inférieur 40 qui est monté fixe sur le bâti de la pédale 55. Le bâti de la pédale 55 comprend ainsi un logement recevant le boîtier constitué du couvercle inférieur 40 et du couvercle supérieur 41. Tout changement de l'environnement électromagnétique dudit capteur 5 génère un changement de signal émis par ledit capteur 5. Ledit signal est transmis au calculateur configurable 3.

Le second élément mobile est un aimant 90 positionné dans un emplacement permettant de rendre ledit aimant 90 solidaire d'un arbre de rotation 95 de l'actionneur 6. Lorsque l'actionneur 6 est au repos, l'aimant 90 est proche du capteur 5. L'arbre de rotation 95 est solidaire d'une tige de liaison 96 d'un patin de pédale incurvé 185 recouvert d'une coiffe de pédale 97 adapté pour couvrir le patin de pédale 185. Donc lorsqu'on appuie sur le patin de pédale 185, l'arbre de rotation 95 tourne sur lui-même autour de l'axe de rotation, éloignant ainsi l'aimant 90 du capteur 5.

Un des bords de la carte électronique 20 comprend une prise femelle mini-USB 70 permettant d'installer le programme de configuration du système d'accélérateur bis. Une fois certains composants de la carte électronique 20 programmés, la carte électronique 20 est capable d'envoyer via un câble à six conducteurs 80 un signal représentatif de la pression exercée sur le patin de la pédale 185 grâce à la détection de la variation du champ magnétique environnant le capteur 5.

L'agencement du capteur à effet de Hall 5 est tel que, lorsque le patin de la pédale 185 est au repos, l'aimant 90 est très proche dudit capteur à effet de Hall 5, par exemple un entrefer de moins de 1mm. Plus on appuie sur le patin de pédale, plus l'aimant s'éloigne du capteur, modifiant ainsi le champ magnétique environnant le capteur à effet de Hall 5. Le capteur à effet de Hall 5 génère alors en temps réel un signal représentatif du changement de champ magnétique détecté.

Ce signal est traité par les composants de la carte électronique 20. Ils forment le calculateur configurable 3 du système d'accélérateur bis 1. Ce traitement dépend de la programmation du circuit imprimé réalisé via une prise femelle mini-USB 70. Le circuit imprimé comprend des pistes qui relient le capteur aux autres composants par un bus qui peut fonctionner, par exemple, selon le standard CAN. Le signal envoyé par le câble six conducteurs 80 peut être directement à la norme CAN, ou bien d'un autre standard. Le programme enregistré sur la carte gère le type de standard du signal transmis au reste du système de communication du véhicule via le câble six conducteur 80.

Un système élastique, comprenant par exemple deux ressorts 120, exerce une force de rappel sur le patin de la pédale 185.

Le système de fixation de l'ensemble tige de liaison et patin de pédale est en deux parties selon un principe dit « à baïonnette ». Une première partie de fixation permanente 130 permet de fixer une tige de liaison 170 sur l'arbre de rotation 95 à l'aide d'une vis 135. Cette première partie comprend une goupille 150.

Une deuxième partie de fixation est amovible. Elle comprend :
- un ressort de compression 155, enfilé dans l'axe de la tige de liaison 96 dans un tube aménagé dans un premier élément de fixation rapide 160, et qui vient en butée sur la tige de liaison 170 configurée pour pouvoir entrer dans le tube du premier élément de fixation rapide 160.
- Une rainure 180 positionnée sur le premier élément de fixation rapide 160, dont la forme présente un tournant qui repart vers le bord sans l'atteindre après un premier segment droit de la rainure 180 près du bord du premier élément de fixation rapide 160.

Ainsi, une fois le ressort de compression 155 positionné, en enfilant la goupille 150 dans la rainure au-delà du tournant de ladite rainure 180, le deuxième élément de fixation rapide 170 peut pénétrer dans le premier élément de fixation rapide 160 en suivant la rainure. En passant le tournant de la rainure 180, l'effet du ressort de compression 155 combiné avec la goupille positionné au fond de la rainure 180 peut bloquer l'élément de fixation 160 et la tige de liaison 170 alignés pour former un axe et une tige de liaison 96.

Il reste possible de séparer ces deux éléments de fixation sans outil, simplement en exerçant une pression dans l'axe de la tige de liaison 96 afin de comprimer le ressort de compression 155. Ainsi, la goupille 150 suit le chemin de la rainure 180 jusqu'à arriver dans le premier segment droit de la rainure 180. Une fois la goupille 150 dans ce premier segment droit de la rainure 180, le patin de pédale 185 ainsi que la portion de tige de liaison 190 qui la relie au premier élément de fixation rapide 160 et ledit premier élément de fixation rapide 160 peuvent être retirés du reste du système d'accélérateur bis.

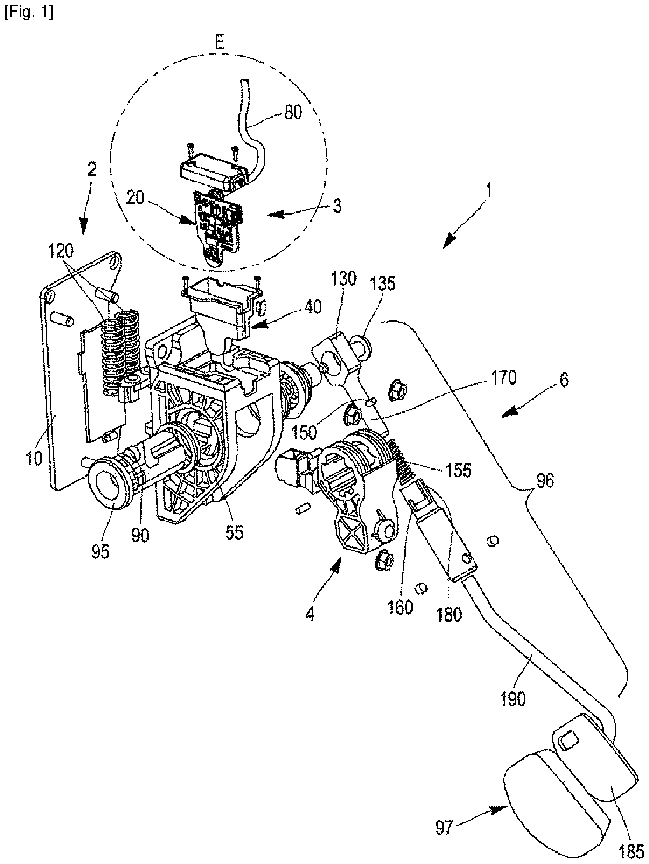

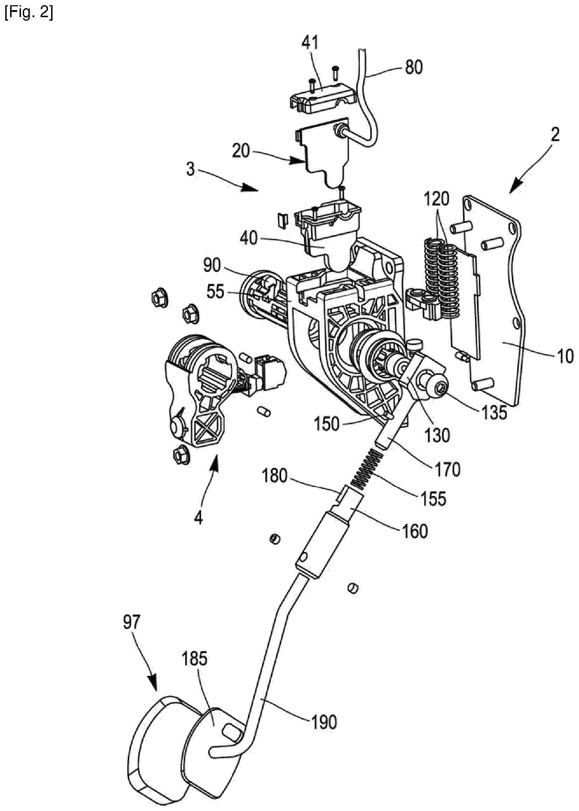

Sur la figure 1 et la figure 2, le patin de pédale 185 est représenté dans la position permettant de réaliser l'assemblage entre le premier élément de fixation rapide 160 et la tige de liaison 170, c'est-à-dire la position dans laquelle la goupille 150 peut entrer dans la rainure 180. La position du patin de pédale 185 telle que représentée n'est donc pas celle de sa position d'utilisation une fois la tige de liaison 170 dûment fixée à l'élément de fixation rapide 160.

Grâce à ce système de fixation, en cas d'usure du patin de pédale 185, il est facile de changer pour un nouveau patin de pédale.

Il est également facile de monter un modèle différent de patin de pédale 185 et de tige de liaison 190 sans outil lors de la configuration du système d'accélérateur bis pour un véhicule en particulier.

Enfin, si le véhicule ne doit plus avoir temporairement de pédale bis, à l'aide d'une manipulation simple sans outil, il est facile de retirer la partie de la pédale bis qui comprend une partie de la tige de liaison 96 et le patin de pédale 185 afin de libérer le plancher temporairement.

L'arbre de rotation 95 présente une configuration qui permet de fixer ledit arbre de rotation 95 à la première partie de fixation 130 en deux positions différentes. Par exemple, il est prévu un trou dans la partie de fixation 130 adapté à la taille de l'arbre à chaque extrémité, et un écrou 135 qui vient, par exemple, se visser dans l'arbre de rotation 95 à travers ce trou, et qui solidarise la première partie de fixation 130 à l'arbre de rotation 95 une fois vissé. Au lieu d'être vissé, l'écrou 135 peut-être clipsé de façon réversible. Ainsi, au moment de la configuration du système d'accélérateur bis 1, l'opérateur a le choix de positionner l'actionneur 6 sur un des deux côtés du système d'accélérateur bis 1. Ainsi, en fonction de l'espace disponible et en fonction de la forme du plancher au niveau des places avant, on peut choisir la position qui convient le mieux pour positionner l'actionneur 6 exactement à l'endroit le plus adéquat pour l'utilisateur.

Ainsi, dans le mode de réalisation présenté, l'arbre de rotation 95 présente au moins une portion cylindrique autour de l'axe de rotation, et coopérant avec le bâti de la pédale 55 à la manière d'un palier, de manière à guider la rotation de l'arbre de rotation 95 par rapport au bâti de la pédale 55 autour de l'axe de rotation. Selon un exemple de réalisation, le bâti de la pédale 55 comporte une base transversale de laquelle s'étendent deux ailes parallèles munies chacune d'une ouverture cylindrique, les deux ouvertures cylindriques étant coaxiales, et étant espacées axialement, de manière à définir un palier pour l'arbre de rotation 95. Une embase définit également un logement pour le passage du boîtier abritant la carte électronique 20 portant le capteur 5. L'arbre de rotation 95 présente un logement central accueillant une portion du couvercle inférieur 40 de ce boîtier. Ce logement central est dimensionné pour permettre la rotation de l'arbre de rotation 95 par rapport à l'axe de rotation, avec la portion de couvercle inférieur restant dans le logement. L'arbre de rotation 95 comprend également un logement recevant l'aimant 90. Ce logement est disposé à proximité du logement central.

L'arbre de rotation 95 comprend, en chaque extrémité axiale, un organe pour la fixation à l'actionneur. Ainsi, dans la configuration présentée, l'actionneur est fixé à droite du châssis. Toutefois, avec les mêmes composants, l'actionneur pourrait être fixé à gauche du châssis. Il suffirait pour cela de fixer la tige de liaison 170 à l'extrémité gauche de l'arbre de rotation 95 au moyen de la vis 135.

Avec la combinaison de ces solutions techniques, le volume total du châssis de la pédale 55 est réduit par rapport aux modèles connus, ce qui facilite l'intégration du système d'accélérateur bis 1 sous le tableau de bord, même dans le cas où il y a peu de place disponible.

L'activation et la désactivation du système d'accélérateur bis 1 est piloté à travers le câble à six conducteurs 80. Une commande non représentée d'activation et de désactivation est montée au niveau des commandes habituelles, soit sur le tableau de bord, soit sur la console centrale entre les sièges avant. Cette commande consiste en un simple interrupteur sous forme de bouton qui s'allume lorsqu'il est en position active par exemple. Cette commande est connectée au reste du système de communication du véhicule et le système d'accélérateur bis 1 reconnait les signaux envoyés par cette commande comme étant des signaux d'activation et de désactivation dudit système 1.

L'activation du système de pédale d'accélérateur bis 1 peut se faire à chaque démarrage du véhicule, par pression sur un bouton dédié relié au réseau de communication embarqué du véhicule, qui envoie un signal via le câble à 6 conducteurs 80 pour activer le système d'accélérateur bis 1.

Dans le cas d'un véhicule d'auto-école, l'activation du système de pédale d'accélérateur bis 1 ne s'accompagne pas de la neutralisation de la pédale d'accélérateur d'origine.

En revanche, dans un véhicule dédié à un usage pour personne handicapée de la jambe droite, la pédale d'accélérateur d'origine est désactivée lors de l'activation du système d'accélérateur bis 1 par le calculateur configurable 3.

La neutralisation ou la non-neutralisation de la pédale d'accélérateur d'origine lorsque le système d'accélérateur bis 1est implémenté est une option configurable au niveau du calculateur configurable.

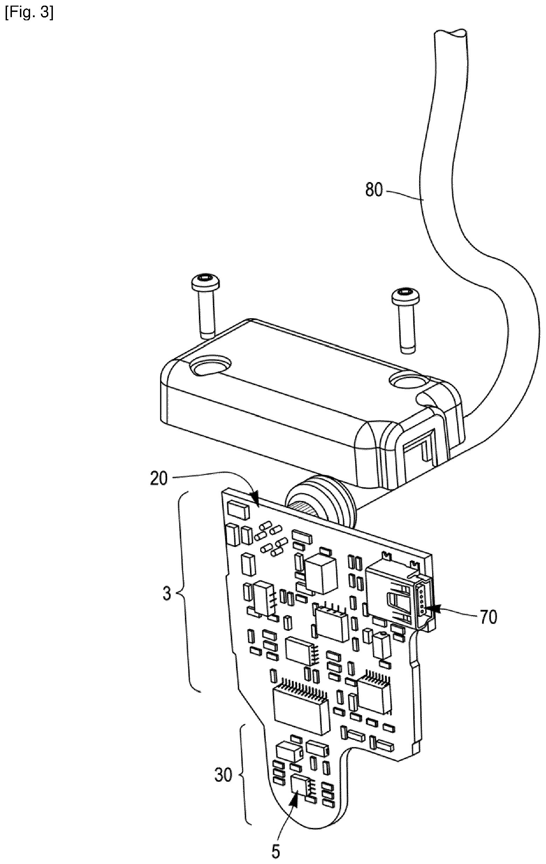

La figure 3 représente le positionnement du capteur 5 sur une saillie 30 de la carte électronique 20, les éléments du calculateur fixés sur la carte électronique 20, et du câble à 6 conducteurs 80 qui relie les éléments du calculateur de la carte électronique 20 au reste de l'architecture de communication d'un véhicule.

Lorsque le patin de pédale reçoit une pression du pied, le ressort en compression est comprimé. Ainsi, un ressenti de résistance est présent au niveau du pied de l'utilisateur qui appuie sur le patin de la pédale. Lorsque le ressort est complètement comprimé, le patin de pédale ne peut plus continuer sa course. En relâchant la pression, le ressort de compression participe à l'effet de retour du patin de la pédale d'accélérateur à sa position de repos.

Une neutralisation de la pédale bis via le système par baïonnette décrit plus haut est possible : la deuxième partie de fixation amovible est retirée.

## Revendications

1. Système d'accélérateur bis (1) pour véhicule automobile comprenant :
- un système de fixation (2) pour fixer le système d'accélérateur bis (1) à un véhicule,
- un bâti (55) solidaire du système de fixation, et définissant un axe de rotation,
- un actionneur (6) comprenant un patin de pédale (185), une tige de liaison (190), et un élément de fixation (130, 135) fixé sur un arbre de rotation (95) monté rotatif par rapport au bâti de la pédale (55) autour de l'axe de rotation, et dont la position par rapport au bâti (55) est détectée par un capteur de position (5), ledit capteur de position (5) étant apte à générer un signal représentatif de la position dudit actionneur (6),
**caractérisé en ce que** :
- un calculateur (3) recevant le signal représentatif de la position dudit actionneur (6) est configurable via une interface d'entrée afin de générer un signal représentatif de la position dudit actionneur (6) selon plusieurs standards, ledit calculateur (3) est connectable via une interface de sortie (80) à un réseau de communication d'information d'un véhicule automobile, et **en ce que**
- l'actionneur (6) peut se fixer selon au moins deux positions axiales différentes par rapport à l'axe de rotation.

2. Système d'accélérateur bis (1) pour véhicule automobile selon la revendication 1, dans lequel l'élément de fixation (130) de l'actionneur (6) peut se fixer de chaque côté latéral du bâti (55)..

3. Système d'accélérateur bis pour véhicule automobile selon la revendication 1 ou 2, dans lequel le calculateur (1) est apte à s'interfacer avec l'architecture électronique du véhicule automobile à l'aide d'un signal multiplexé.

4. Système d'accélérateur bis pour véhicule automobile selon l'une des revendications 1 à 3, dans lequel le calculateur (1) est configurable pour générer un signal multiplexé selon la norme ISO 11898 (CAN), ou modulés en Largeur d'Impulsion (MLI), ou transmis par paquet sur front unique selon la norme SAE J2716 (SENT), ou analogiques.

5. Système d'accélérateur bis (1) pour véhicule automobile selon l'une des revendications 1 à 4, dans lequel le calculateur (3) est configurable pour générer un signal qui reproduit les informations du mouvement de la pédale d'origine selon toutes les dimensions dudit mouvement, notamment vitesse d'accélération de la pédale, course complète d'accélération, position instantanée et/ou position limite atteinte.

6. Système d'accélérateur bis (1) pour véhicule automobile selon l'une des revendications 1 à 5, dans laquelle le capteur (5) est un capteur à effet Hall générant un signal électronique numérisé.

7. Système d'accélérateur bis (1) pour véhicule automobile, selon l'une des revendications 1 à 6, comprenant une deuxième partie de fixation amovible de la tige de liaison (96) à l'arbre de rotation (95).

8. Système d'accélérateur bis (1) pour véhicule automobile selon l'une des revendications 1 à 7, dans lequel le bâti (55) comprend une embase à partir de laquelle s'étendent deux ailes parallèles définissant un palier pour l'arbre de rotation, l'embase définissant un logement pour un boîtier abritant le capteur de position (5), l'arbre de rotation (95) comprenant un premier logement adapté pour recevoir au moins partiellement le boîtier, et un deuxième logement portant un aimant (90) en regard du premier logement.

9. Véhicule d'auto-école équipé d'un pédalier conducteur et d'un système d'accélérateur bis (1) pour véhicule automobile selon l'une des revendications 1 à 8.

10. Utilisation du système d'accélérateur bis (1) selon l'une des revendications 1 à 8 comme pédale d'accélérateur pour pied gauche installé au niveau de la place conducteur d'un véhicule adapté pour un conducteur handicapé de la jambe droite.

11. Utilisation du système d'accélérateur bis (1) selon l'une des revendications 1 à 8 comme pédale d'accélérateur pour un instructeur installé au niveau de la place avant passager d'un véhicule d'auto-école.

## Patentansprüche

1. Zweites Gaspedalsystem (1) für ein Kraftfahrzeug, das folgendes umfasst:
ein Befestigungssystem (2) zum Befestigen des zweiten Gaspedalsystems (1) an einem Fahrzeug, einen Rahmen (55), der fest mit dem Befestigungssystem verbunden ist und eine Drehachse definiert,
ein Stellglied (6) mit einer Pedalplatte (185), einer Verbindungsstange (190) und einem Befestigungselement (130, 135), das an einer Drehwelle (95) befestigt ist, die in Bezug auf den Pedalrahmen (55) um die Drehachse drehbar montiert ist und deren Position in Bezug auf den Rahmen (55) von einem Positionssensor (5) erfasst wird, wobei der Positionssensor (5) ein Signal erzeugen kann, das die Position des Stellglieds
(6) repräsentiert,
**dadurch gekennzeichnet, dass**
eine Steuereinheit (3), die das für die Position des Stellglieds (6) repräsentative Signal empfängt, über eine Eingabeschnittstelle so konfiguriert werden kann, dass sie ein für die Position des Stellglieds (6) repräsentatives Signal gemäß mehreren Standards erzeugt, wobei die Steuereinheit (3)
über eine Ausgabeschnittstelle (80) an ein Informationskommunikationsnetz eines Kraftfahrzeugs angeschlossen werden kann, und dadurch, dass das Stellglied (6) in mindestens zwei verschiedenen axialen Positionen in Bezug auf die Drehachse befestigt werden kann.

2. Zweites Gaspedalsystem (1) für ein Kraftfahrzeug nach
Anspruch 1, wobei das Befestigungselement (130) des Stellglieds (6) an jeder Seitenfläche des Rahmens (55) befestigt werden kann.

3. Zweites Gaspedalsystem für ein Kraftfahrzeug nach Anspruch 1 oder 2, wobei die Steuereinheit (1) in der Lage ist, mithilfe eines Multiplexsignals eine Schnittstelle mit der elektronischen Architektur des Kraftfahrzeugs zu bilden.

4. Zweites Gaspedalsystem für ein Kraftfahrzeug nach einem der Ansprüche 1 bis 3, wobei die Steuereinheit (1) so konfiguriert werden kann, dass sie ein Multiplexsignal gemäß ISO 11898 (CAN), ein pulsbreitenmoduliertes Signal (PWM), ein paketweise übertragenes Einflanken-Signal gemäß SAE J2716 (SENT) oder Analogsignale erzeugt.

5. Zweites Gaspedalsystem (1) für ein Kraftfahrzeug nach einem der Ansprüche 1 bis 4, wobei die Steuereinheit (3) so konfiguriert werden kann, dass die Bewegungsinformationen des ersten Pedals in allen
Dimensionen der Bewegung reproduziert werden, insbesondere die Beschleunigungsgeschwindigkeit des Pedals, der vollständige Beschleunigungsweg, die momentane Position und/oder die erreichte Grenzposition.

6. Zweites Gaspedalsystem (1) für ein Kraftfahrzeug nach einem der Ansprüche 1 bis 5, wobei der Sensor (5) ein Hall-Effekt-Sensor ist, der
ein digitalisiertes elektronisches Signal erzeugt.

7. Zweites Gaspedalsystem (1) für ein Kraftfahrzeug nach einem der Ansprüche 1 bis 6, mit einem zweiten Teil zur lösbaren Befestigung der Verbindungsstange (96) an der Drehwelle (95).

8. Zweites Gaspedalsystem (1) für ein Kraftfahrzeug nach einem
der Ansprüche 1 bis 7, wobei der Rahmen (55) eine Basis umfasst, von der aus sich zwei parallele Flügel erstrecken, die ein Lager für die Drehwelle definieren, wobei die Basis eine Aufnahme für ein Gehäuse mit Positionssensor (5) definiert, wobei die Drehwelle (95) eine erste Aufnahme umfasst, die das Gehäuse zumindest teilweise aufnehmen kann, sowie eine zweite Aufnahme, die einen Magneten (90) gegenüber
der ersten Aufnahme trägt.

9. Fahrschulfahrzeug, das mit einem Fahrerpedalwerk und einem zweiten Gaspedalsystem (1) für ein Kraftfahrzeug nach einem der Ansprüche 1 bis 8 ausgestattet ist.

10. Verwendung des zweiten Gaspedalsystems (1) nach einem der Ansprüche 1 bis 8 als Gaspedal für einen linken Fuß, wobei dieses am Fahrersitz eines Fahrzeugs angebracht ist, das sich für einen Fahrer mit einer Behinderung des rechten Beins eignet.

11. Verwendung des Gaspedalsystems bis (1) nach einem der Ansprüche 1 bis 8 als Gaspedal für einen Fahrlehrer, wobei dieses am Beifahrersitz eines Fahrschulfahrzeugs angebracht ist.

## Claims

1. Dual accelerator system (1) for a motor vehicle comprising:
- a mounting system (2) for mounting the dual accelerator system (1) to a vehicle,
- a frame (55) secured to the mounting system and defining an axis of rotation,
- an actuator (6) comprising a pedal pad (185), a connecting rod (190), and a mounting element (130, 135) attached to a rotation shaft (95) rotatably mounted relative to the pedal frame (55) about the axis of rotation, and whose position relative to the frame (55) is detected by a position sensor (5), said position sensor (5) being capable of generating a signal representative of the position of said actuator (6),
**characterized in that**:
- a computer (3) receiving the signal representative of the position of said actuator (6) is configurable via an input interface to generate a signal representative of the position of said actuator (6) according to several standards, said computer (3) is connectable via an output interface (80) to a motor vehicle information communication network, and **in that**
- the actuator (6) can be fixed in at least two different axial positions relative to the axis of rotation.

2. A dual accelerator system (1) for a motor vehicle according to claim 1, wherein the fixing element (130) of the actuator (6) can be fixed on each lateral side of the frame (55).

3. A dual accelerator system for a motor vehicle according to claim 1 or 2, wherein the computer (1) is capable of interfacing with the electronic architecture of the motor vehicle using a multiplexed signal.

4. A dual accelerator system for a motor vehicle according to one of claims 1 to 3, wherein the computer (1) is configurable to generate a multiplexed signal according to the ISO 11898 standard (CAN), or a pulse width modulated (PWM), or a single-edge packet transmitted signal according to the SAE J2716 standard (SENT), or an analogic signal.

5. A dual accelerator system (1) for a motor vehicle according to one of claims 1 to 4, wherein the computer (3) is configurable to generate a signal that reproduces the information of the original pedal movement in all dimensions of said movement, in particular the pedal acceleration speed, full acceleration travel, instantaneous position, and/or limit position reached.

6. A dual accelerator system (1) for a motor vehicle according to one of claims 1 to 5, wherein the sensor (5) is a Hall effect sensor generating a digitized electronic signal.

7. A dual accelerator system (1) for a motor vehicle, according to one of claims 1 to 6, comprising a second portion for removable attachment of the connecting rod (96) to the rotation shaft (95).

8. A dual accelerator system (1) for a motor vehicle according to one of claims 1 to 7, wherein the frame (55) comprises a base from which extend two parallel wings defining a bearing for the rotation shaft, the base defining a housing for a casing housing the position sensor (5), the rotation shaft (95) comprising a first housing adapted to at least partially receive the housing, and a second housing carrying a magnet (90) opposite the first housing.

9. Driving school vehicle equipped with a driver's pedal assembly and a dual accelerator system (1) for a motor vehicle according to one of claims 1 to 8.

10. Use of the dual accelerator system (1) according to one of claims 1 to 8 as a left-foot accelerator pedal installed in the driver's seat of a vehicle adapted for a driver with a right-leg disability.

11. Use of the dual accelerator system (1) according to one of claims 1 to 8 as an accelerator pedal for an instructor installed in the front passenger seat of a driving school vehicle.
